Europäisches Patentamt

European Patent Office

Office européen des brevets

(19)

(11) Veröffentlichungsnummer : **0 225 982**
**B1**

(12) EUROPÄISCHE PATENTSCHRIFT

(45) Veröffentlichungstag der Patentschrift :
05.04.89

(21) Anmeldenummer : 86113915.2

(22) Anmeldetag : 07.10.86

(51) Int. Cl.⁴ : **B 62 K 21/08**

(54) Lenkungsdämpfer für ein Motorrad oder dergleichen.

(30) Priorität : 19.12.85 DE 3545139

(43) Veröffentlichungstag der Anmeldung :
24.06.87 Patentblatt 87/26

(45) Bekanntmachung des Hinweises auf die Patenterteilung : 05.04.89 Patentblatt 89/14

(84) Benannte Vertragsstaaten :
DE FR GB IT

(56) Entgegenhaltungen :
DE—C— 889 870
DE—C— 939 251
DE—C— 947 137
GB—A— 320 469

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Peres, Laszlo
Traunstrasse 2
D-8000 München 82 (DE)

(74) Vertreter : Dexheimer, Rolf
Bayerische Motoren Werke Aktiengesellschaft Postfach 40 02 40 Petueiring 130 - AJ-31
D-8000 München 40 (DE)

EP 0 225 982 B1

## Beschreibung

Die Erfindung bezieht sich auf einen Lenkungsdämpfer für ein Motorrad der im Oberbegriff des Patentanspruchs 1 genannten und durch die FR-A-1 264 592 bekanntgewordenen Art.

Wie auf Seite 2, rechte Spalte der FR-A-1 264 592 beschrieben, kann das in dieser Druckschrift offenbarte Reibungselement als ein Kunststoffring gestaltet sein, der an seinem Außenumfang und an seiner Durchgangsöffnung längsverlaufende Vorsprünge aufweist. Diese stehen mit der Wandung des Steuerkopfrohrs und mit dem Außenmantel des Lenkschafts in einem Gleitkontakt. Somit wird durch das bekannte Reibungselement sogleich nach dem Ansprechen der Motorradlenkung ein Reibmoment erzeugt. Dies hat den Nachteil, daß die Hochgeschwindigkeitsstabilität des Motorrads bei in dieses im Hochgeschwindigkeitsbereich (etwa 150 bis 200 km/h) eingeleiteten Schwingungen — verursacht durch Lenkunruhe, Körperbewegungen des Fahrers oder dgl. — derart verschlechtert wird, daß das Fahrverhalten des Motorrads beeinträchtigt werden kann.

Aufgabe der Erfindung ist es daher, einen Lenkungsdämpfer der im Oberbegriff des Patentanspruchs 1 genannten Gattung mit verhältnismäßig geringem Fertigungsaufwand derart auszubilden, daß durch ihn das Fahrverhalten des Motorrads im Hochgeschwindigkeitsbereich nicht beeinflußt wird.

Zur Lösung der Aufgabe sind die im kennzeichnenden Teil des Patentanspruchs 1 dargelegten Merkmale vorgesehen.

Da das Reibungselement erfindungsgemäß aus gummielastischem Material besteht (etwa 40 bis 50 Shorehärte) und über die Wandung seiner Durchgangsöffnung mit radialer Vorspannung am Lenkschaft anliegt, kann sich dieser entsprechend der Gummielastizität des Reibungselements in Bezug zum starren Steuerkopfrohr aus seiner Ruhelage in zueinander entgegengesetzten Umfangsrichtungen um jeweils etwa 1° winkelmäßig verlagern, so daß die Hochgeschwindigkeitsstabilität des Motorrads bei beispielsweise in dieses eingeleiteter Lenkunruhe, Körperbewegungen des Fahrers oder dergleichen, nicht beeinträchtigt wird. Denn erst nach einem Winkelversatz des Lenkschafts um jeweils etwa 1° spricht die Wirkung des Reibungselements durch dessen Reibwirkung am Lenkschaft als eine « gleitende Reibung » mit einem Reibmoment von etwa 1-2,5 Nm an. Dabei läßt sich mit dem erfindungsgemäßen Lenkungsdämpfer auch eine Verbesserung der Zielgenauigkeit des Motorrads bei schneller Kurvenfahrt erreichen. Ein Reibmoment bis zu etwa 2,5 Nm ist jedoch auch noch bei Langsamfahrt des Motorrads tragbar.

In Ausgestaltung der Erfindung ist vorgesehen, das Reibungselement mit seinem Außenmantel drehfest an der inneren Wandung des Steuerkopfrohrs festzulegen (Merkmal des Patentanspruchs 2).

Gemäß den Merkmalen des Patentanspruchs 3 besteht das Reibungselement aus zwei koaxial zueinander verlaufenden Aufnahmehülsen zwischen denen eine Gummischicht drehfest einvulkanisiert ist. Dabei trägt die innenliegende Aufnahmehülse auf ihrer Innenwandung eine Gummi-Innenschicht. Ein derart gestaltetes Reibungselement kann über seine aus Kunststoff bestehende, außenliegende Aufnahmehülse in einfacher Weise in das Steuerkopfrohr eingesetzt und in diesem beispielsweise durch eine Arretierschraube (Merkmal des Patentanspruchs 4) arretiert werden.

Die an der innenliegenden, aus Metall bestehenden Aufnahmehülse vorgesehene Gummi-Innenschicht verläuft zweckmäßigerweise in einem Längsschnitt wellenförmig. Dabei liegen die Wellenkämme mit einer solchen radialen Vorspannung am Lenkschaft an, daß ein Reibmoment von etwa 1-2,5 Nm entsteht. In den Wellentälern der Gummi-Innenschicht befindet sich Silikonfett (Merkmale der Patentansprüche 5 und 6). Durch die wellenförmige Ausbildung der Gummi-Innenschicht entsteht an dieser kaum ein Verschleiß. Dazu trägt auch die in den taschenförmigen Wellentälern vorhandene Schmierfettfüllung bei, die darüber hinaus auch einen störungsfreien Betriebseinsatz des Reibungselements im gesamten, üblichen Motorrad-Temperaturbereich gewährleistet. Durch die am Reibungselement vorgesehene, innenliegende Aufnahmehülse ist die Dicke der Gummi-Innenschicht und damit deren radiale Vorspannung für das vorzusehende Reibmoment am Lenkschaft exakt definierbar, während darüber hinaus andererseits durch die innenliegende Aufnahmehülse auch die Radialerstreckung der die Winkelverdrehung zwischen Lenkschaft und Steuerkopfrohr gewährleistenden Gummischicht genau konstruktiv festlegbar ist.

Ein Ausführungsbeispiel der Erfindung ist in der Zeichnung dargestellt und wird im folgenden erläutert. Es zeigt :

Fig. 1 eine perspektivische Darstellung eines Motorrad-Steuerkopfs mit erfindungsgemäßem Lenkungsdämpfer,

Fig. 2 einen Schnitt längs der Linie II-II in Fig. 1.

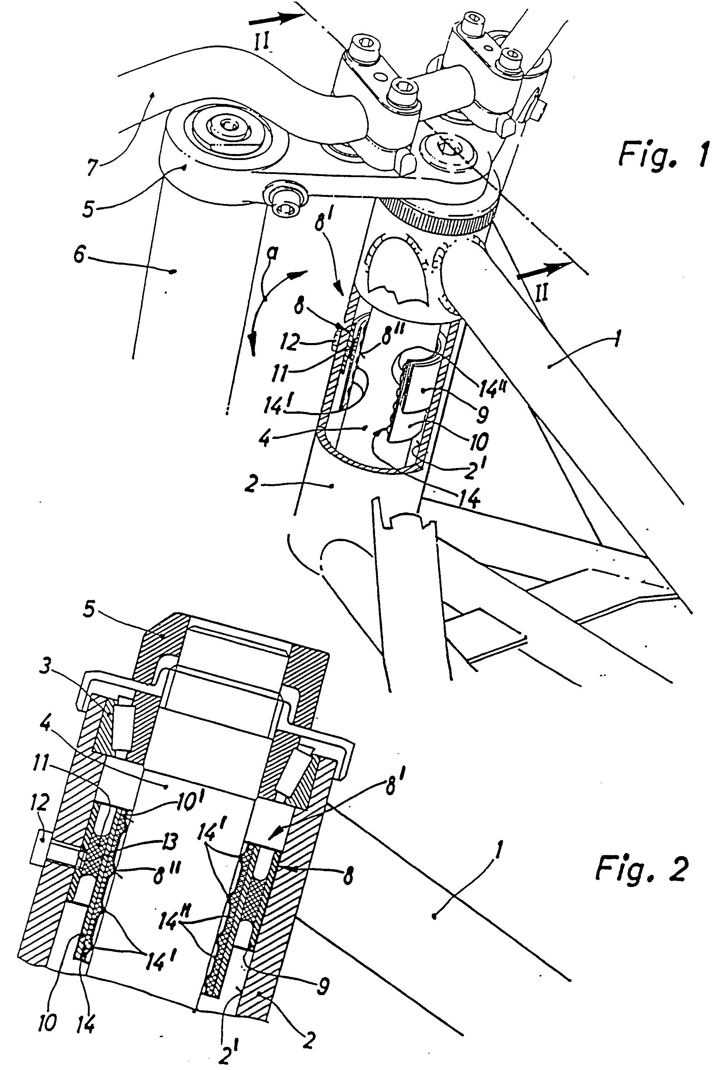

Wie in den Fig. 1 und 2 ersichtlich, befindet sich am vorderen Ende eines Rahmens 1 eines Motorrads einer Steuerkopfrohr 2. In diesem ist über ein obenliegendes und nicht dargestelltes untenliegendes Wälzlager 3 ein Lenkschaft 4 drehbar gelagert. Dieser trägt an seinem über das Steuerkopfrohr 2 hinausragenden Endabschnitt drehfest eine obere Gabelbrücke 5, an der sich eine Vorderradgabel 6 und ein Lenker 7 befindet.

Zwischen den beiden Wälzlagern 3 ist in das Steuerkopfrohr 2 ein Reibungselement 8 mit kreisringförmigem Querschnitt eingesetzt, das als ein Motorrad-Lenkungsdämpfer 8' dient und den Lenkschaft 4 koaxial umgibt. Wie in Fig. 2 ersichtlich, besteht das Reibungselement 8 aus einer außenliegenden, aus Kunststoff bestehenden Aufnahmehülse 9 und einer koaxial zu dieser verlaufenden innenliegenden Aufnahmehülse 10, welche aus Metall besteht. In den zwischen den beiden Aufnahmehülsen 9 und 10 liegenden radialen Zwischenraum ist eine Gummischicht 11 mit etwa 40 bis 50 Shorehärte einvulkanisiert, so daß die beiden Aufnahmehülsen 9 und 10 drehfest miteinander verbunden sind. Damit sich der Lenkschaft 4 in Bezug zum Steuerkopfrohr 2 optimal winkelmäßig um seine Längsachse drehen kann — wie im folgenden erläutert wird — ist es auch denkbar, daß die Gummischicht 11 mit Ausnehmungen versehen ist. In das Steuerkopfrohr 2 ist quer zu seiner Längsachse eine Arretierschraube 12 eingeschraubt, welche mit ihrem freien Endabschnitt in eine im Mittelbereich der Längserstreckung der außenliegenden Aufnahmehülse 9 vorgesehene Ausnehmung 13 eingreift. Hierdurch ist das Reibungselement 8 bei festgezogener Arretierschraube 12 an der inneren Rohrwandung 2' des Steuerkopfrohrs 2 dreh- und schubfest fixiert. Auf die dem Lenkschaft 4 zugewandte Innenwandung 10' der innenliegenden Aufnahmehülse 10 — welche etwas länger ist als die außenliegende Aufnahmehülse 9 — ist eine Gummi-Innenschicht 14 aufvulkanisiert. Deren dem Lenkschaft 4 zugewandte Wandung verläuft in einem Längsschnitt wellenförmig, wobei beim dargestellten Ausführungsbeispiel vier wulstförmig umlaufende Wellenkämme 14' gebildet sind. Der lichte Durchmesser von deren Durchgangsöffnung 8'' ist im Herstellzustand des Reibungselements 8 derart bemessen, daß in dessen Einbaulage die Wellenkämme 14' am Außenmantel des Lenkschafts 4 mit einer solchen radialen Vorspannung anliegen, daß bei Lenkbewegungen der Vorderradgabel 6 in den Richtungen des Doppelpfeiles a ein Reibmoment von etwa 1-2,5 Nm entsteht. Dabei hat auch die Gummi-Innenschicht 14 eine Shorehärte von etwa 40 bis 50 ; diese kann natürlich bedarfsweise — gleichermaßen wie die Shorehärte der Gummischicht 11 — größer und kleiner sein. Die zwischen den Wellenkämmen 14' liegenden taschenförmigen Wellentäler 14'' sind mit Silikonfett oder auch jedem anderen Schmierfett gefüllt. Durch die in den Wellentälern 14'' vorhandene Fettfüllung ist der Verschleiß an der Innenwandung der Gummi-Innenschicht 14 verhältnismäßig gering. Darüber hinaus trägt die Fettfüllung auch dazu bei, daß die Gummi-Innenschicht 14 in dem für das Motorrad relevanten Temperaturbereich weitgehend geschmeidig bleibt.

Da die Gummi-Innenschicht 14 über ihre vier Wellenkämme 14' mit radialer Vorspannung am Lenkschaft 4 anliegt, kann sich dieser bei im Hochgeschwindigkeitsbereich (150 bis 200 km/h) in das Motorrad eingeleiteten Pendelschwingungen entsprechend der Elastizität der Gummischicht 11 im Bezug zur drehfest am Steuerkopfrohr 2 fixierten, außenliegenden Aufnahmehülse 9 aus seiner Ruhelage (Nullage) in den Richtungen des Doppelpfeils a (Fig. 1) um jeweils etwa 1° winkelmäßig verlagern, wodurch die Hochgeschwindigkeitsstabilität des Motorrads nicht beeinträchtigt wird. Denn erst nach der geschilderten, winkelmäßigen Verlagerung des Lenkschafts 4 um das Steuerkopfrohr 2 spricht die Wirkung des den Lenkungsdämpfer 8' bildenden Reibungselements 8 unter Erzeugung einer gleitenden Reibung mit einem Reibmoment von etwa 1-2,5 Nm an. Der erfindungsgemäße Lenkungsdämpfer 8' beeinträchtigt somit nicht die Hochgeschwindigkeitsstabilität des Motorrads.

Durch die vorgesehene innenliegende Aufnahmehülse 10 ist eine exakte Definierung der Dicke der Gummi-Innenschicht 14 möglich. Damit kann auch genau deren radiale Vorspannung am Lenkschaft 4 bestimmt werden. Darüber hinaus kann auch durch die innenliegende Aufnahmehülse 10 exakt die Dicke der Gummischicht 11 und damit deren Torsionselastizität bestimmt werden. Schließlich ist es ein Vorteil der außenliegenden Aufnahmehülse 9, daß das Reibungselement 8 leicht montiert und im Steuerkopfrohr 2 gegen Torsionsdrehen arretiert werden kann.

**Patentansprüche**

1. Lenkungsdämpfer (8') für ein Motorrad oder dergleichen, bestehend aus einem aus elastischem Material gefertigten, ringförmigen Reibungselement (8), das einerseits an seinem Außenumfang mit der inneren Wandung (2') eines Steuerkopfrohrs (2) und andererseits mindestens abschnittsweise über die Wandung seiner Durchgangsöffnung (8'') mit einem im Steuerkopfrohr drehbar gelagerten Lenkschaft (4) in Verbindung steht, dadurch gekennzeichnet, daß das Reibungselement (8) aus gummielastischem Material besteht und mit seiner Durchgangsöffnung (8'') mit radialer Vorspannung am Lenkschaft (4) anliegt, wobei sein Außenumfangsbereich drehfest mit dem Steuerkopfrohr (2) verbunden ist.

2. Lenkungsdämpfer nach Anspruch 1, dadurch gekennzeichnet, daß das Reibungselement (8) mit seinem Außenmantel drehfest an der inneren Wandung (2') des Steuerkopfrohrs (2) festgelegt ist.

3. Lenkungsdämpfer nach Anspruch 1 oder 2, dadurch gekennzeichnet, daß das Reibungselement (8) zwei koaxial zueinander verlaufende und über eine Gummischicht (11) drehfest miteinander verbundene Aufnahmehülsen (9, 10) aufweist, wobei die innenliegende Aufnahmehülse (10) auf ihrer dem Lenkschaft (4) zugewandten Innenwandung eine Gummi-Innenschicht (14) drehfest trägt.

4. Lenkungsdämpfer nach Anspruch 2 und 3, dadurch gekennzeichnet, daß die außenliegende Aufnahmehülse (9) des Reibungselements (8) an der inneren Wandung (2') des Steuerkopfrohrs (2) durch eine in diese eingesetzte Arretierschraube (12) festgelegt ist.

5. Lenkungsdämpfer nach Anspruch 3, dadurch gekennzeichnet, daß die an der innenliegenden Aufnahmehülse (10) des Reibungselements (8) vorhandene Gummi-Innenschicht (14) in einem Längsschnitt wellenförmig verläuft, wobei mehrere Wellenkämme (14') mit einer solchen radialen Vorspannung am Lenkschaft (4) anliegen, daß ein Reibmoment von etwa 1,0-2,5 Nm entsteht.

6. Lenkungsdämpfer nach Anspruch 5, dadurch gekennzeichnet, daß sich in den taschenförmigen Wellentälern (14'') der Gummi-Innenschicht (14) des Reibungselements (8) Schmierfett befindet.

## Claims

1. A steering damper (8') for a motor cycle or the like, comprising an annular friction element (8) manufactured from elastic material which is in connection for the one part at its external circumference with the inner wall (2') of a control head tube (2) and for the other part, at least by sections, through the wall of its passage opening (8'') with a steering column (4) mounted rotatably in the control head tube, characterised in that the friction element (8) is made of rubber-elastic material and rests with its passage opening (8'') with radial initial stress on the steering column (4), its external circumferential zone being connected fast in rotation with the control head tube (2).

2. A steering damper according to Claim 1, characterised in that the friction element (8) is made fast with its external periphery fast in rotation on the inner wall (2') of the control head tube (2).

3. A steering damper according to Claim 1 or 2, characterised in that the friction element (8) comprises two reception sleeves (9, 10) extending coaxially with one another and connected fast in rotation with one another by a rubber layer (11), the inner reception sleeve (10) carrying a rubber inner layer (14) fast in rotation on its inner wall facing the steering column (4).

4. A steering damper according to Claims 2 and 3, characterised in that the outer reception sleeve (9) of the friction element (8) is made fast on the inner wall (2') of the control head tube (2) by an arresting screw (12) inserted into this wall.

5. A steering damper according to Claim 3, characterised in that the rubber inner layer (14) present on the inner reception sleeve (10) of the friction element (8) has an undulatory course in longitudinal section, with several undulation crests (14') resting on the steering column (4) with such radial initial stress that a friction moment of about 1.0-2.5 Nm is produced.

6. A steering damper according to Claim 5, characterised in that lubricant grease is provided in the undulation troughs (14'') of pocket form of the rubber inner layer (14) of the friction element (8).

## Revendications

1. Amortisseur de direction (8') pour motos, ou similaires, se composant d'un élément de frottement (8) de forme annulaire, fabriqué en matériau élastique, relié d'une part à sa périphérie extérieure à la paroi interne (2') d'un tube de direction (2) et d'autre part au moyen par parties, par la paroi de son orifice de passage (8''), à une tige de direction (4) montée tournante dans le tube de direction, caractérisé en ce que l'élément de frottement (8) se compose d'un matériau à l'élasticité du caoutchouc et appuie avec son orifice de passage (8'') sur la tige de direction (4) avec une précontrainte radiale, sa zone de périphérie extérieure étant reliée en rotation au tube de direction (2).

2. Amortisseur de direction selon la revendication 1, caractérisé en ce que l'élément de frottement (8) est fixé bloqué en direction avec son enveloppe extérieure sur la paroi intérieure (2') du tube de direction (2).

3. Amortisseur de direction selon la revendication 1 ou 2, caractérisé en ce que l'élément de frottement (8) présente deux douilles de réception (9, 10) se développant coaxialement l'une par rapport à l'autre et reliées ensemble en rotation par une couche de caoutchouc (11), la douille de réception intérieure (10) portant bloquée en rotation une couche intérieure de caoutchouc (14) sur sa paroi intérieure tournée vers la tige de direction (4).

4. Amortisseur de direction selon la revendication 2 et 3, caractérisé en ce que la douille de réception extérieure (9) de l'élément de frottement (8) est fixée sur la paroi intérieure (2') du tube de direction (2) au moyen d'une vis de fixation (12) introduite dans celui-ci.

5. Amortisseur de direction selon la revendication 3, caractérisé en ce que la couche intérieure de caoutchouc (14) existant sur la douille de réception intérieure (10) de l'élément de frottement (8) se développe avec une section longitudinale en forme d'ondes, plusieurs crêtes d'ondes (14') appuyant sur la tige de direction (4) avec une précontrainte telle qu'il apparaît un couple de frottement d'environ 1,0 à 2,5 Nm.

6. Amortisseur de direction selon la revendication 5, caractérisé en ce que la graisse de lubrification se trouve dans les creux d'ondulation (14'') en forme de poches de la couche intérieure de caoutchouc (14) de l'élément de frottement (8).

EP 0 225 982 B1

Fig. 1

Fig. 2